(19) Europäisches Patentamt
European Patent Office
Office européen des brevets

(11) Publication number: **0 271 852 B1**

(12) **EUROPEAN PATENT SPECIFICATION**

(45) Date of publication of patent specification: **01.06.94** (51) Int. Cl.[5]: **G06F 15/02**

(21) Application number: **87118441.2**

(22) Date of filing: **12.12.87**

(54) **Electronic calculator.**

(30) Priority: **15.12.86 JP 298178/86**
**23.12.86 JP 315500/86**
**23.12.86 JP 315501/86**

(43) Date of publication of application:
**22.06.88 Bulletin 88/25**

(45) Publication of the grant of the patent:
**01.06.94 Bulletin 94/22**

(84) Designated Contracting States:
**DE GB**

(56) References cited:
**US-A- 4 282 514**
**US-A- 4 488 250**
**US-A- 4 545 022**

(73) Proprietor: **SHARP KABUSHIKI KAISHA**
**22-22 Nagaike-cho**
**Abeno-ku**
**Osaka 545(JP)**

(72) Inventor: **Matsuda, Eichika**
**808, Matsuzuka**
**Yamatotakada-shi Nara-ken(JP)**
Inventor: **Kado, Makoto**
**492, Minosho-cho**
**Yamatokoriyama-shi Nara-ken(JP)**

(74) Representative: **Selting, Günther, Dipl.-Ing. et al**
**Patentanwälte**
**von Kreisler, Selting, Werner**
**Postfach 10 22 41**
**D-50462 Köln (DE)**

**EP 0 271 852 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an electronic calculator which has a function to change the display between a decimal expression and a fraction expression. More particularly, the present invention relates to a calculator which displays the number in the fraction expression when the decimal part can be represented as $^x/2^n$ (x is an integer; n is an integer), and displays the number in the decimal expression when the decimal part can not be expressed by $^x/2^n$.

An electronic calculator which is capable of converting between the decimal expression and the fraction expression is already available on the market. However, all such conventional calculators are designed to convert decimal representations to fractional representations, or vice versa, in response to the user's operation, and none of them are designed to automatically convert between decimal expression and fraction expression according to the nature of the numerical values.

The precharacterizing part of claim 1 refers to an electronic calculator as disclosed in US-A-4 488 250. The known calculator comprises arithmetic function input keys including an input key for performing the arithmetic operation $x^2$. The calculator further comprises a feet input key for entering the value on the display as feet and an inches input key for entering the value as inches. Through use of the input keys, the calculator is capable of performing calculations in feet and in inches.

The entry of the value into the known calculator follows the same sequence as the value is commonly spoken. In order to avoid a wrong entry, a unit indicator flashes to indicate to the user whether the feet input key or the inches input key is pressed. When the user has pressed the feet input key, the feet indicator flashes to indicate the user to press in the value as feet or vice versa. It is a drawback of the known calculator that a wrong entry sequence is possible.

It is the object of the present invention to provide an electronic calculator which inhibits entering of inappropriate data.

This problem is solved, according to the invention, with the features of claim 1.

The electronic calculator of the invention comprises means for inputting a numerical data, means for inputting at least first and second unit data which are in the same category but in different levels such that the first unit is higher in level than the second unit, and means for inhibiting the entering of the first unit data when the first unit data is inputted immediately after entering a numerical data followed by the second unit data.

Furthermore, according to the present invention, an electronic calculator comprises means for inputting a numerical data, means for inputting a dimension data to be added to an inputted numerical data, said dimension data being either one of a first, second or third order dimension, means for inputting an arithmetic operator for effecting a calculation among two or more numerical data inputted by said numerical inputting means, means for calculating a dimension of a number which is a result of the calculation, and means for outputting the calculated dimension together with the calculated result.

These and other objects and features of the present invention will become clear from the following description taken in conjunction with the preferred embodiments thereof with reference to the accompanying drawings, in which:

Fig. 1 is a top plan view of an electronic calculator according to a preferred embodiment of the present invention;
Fig. 2 is a fragmentary view of a display screen of the calculator of Fig. 1;
Fig. 3 is a block diagram of the electronic calculator shown in Fig. 1;
Fig. 4 is a flowchart for entering a yard unit data;
Fig. 5 is a flowchart for entering a foot unit data;
Fig. 6 is a flowchart for entering an inch unit data;
Fig. 7 is a flowchart for entering a dimension representing a square;
Fig. 8 is a flowchart for entering a dimension representing a cubic volume;
Fig. 9 is a flowchart for entering a slash for use in the indication of a fraction;
Fig. 10 is a flowchart for entering a numeric data;
Fig. 11 is a flowchart for calculating dimensions and for effecting an automatic display of a numeral in a fraction representation;
Fig. 12 is a flowchart showing a detail of an error routine shown in Fig. 11;
Fig. 13 is a flowchart showing a detail of step #19 shown in Fig. 11; and
Fig. 14 is a flowchart showing a detail of step #20 shown in Fig. 11.

Before the description of the present invention proceeds, it is to be noted that like parts are designated by like reference numerals throughout the accompanying drawings.

Referring to Fig. 1, there is shown a top plan view of an electronic calculator according to one embodiment of the present invention.

The description herein is given in relation to the application of the present invention to an electronic calculator which performs calculations in yards, feet and inches.

The functions with respect to each key on the keyboard are as follows.

| Key Identification | Function |
|---|---|
| YD | yard input |
| FT | foot input |
| IN | inch input |
| a/b | fraction input |
| SQ | area input |
| CUB | cubic volume input |
| →DEC | converts fractions to decimals |
| →FRAC | converts decimals to fractions |

There are more keys, such as ten numerical keys for inputting numerical values, arithmetic operational keys, and a memory key, which are omitted from the description here because they are used in known manners.

A numerical value accompanied by a unit is inputted in the calculator by the depression of one or more numerical keys to input a number, and then, by the depression of one of the above-mentioned unit keys, to input a unit. A calculation of a value accompanied by a unit is executed by inputting the numerical value accompanied by a unit and depressing one of the operational keys.

According to the electronic calculator of the present invention, there are a plurality of unit data to be entered which are in the same category, such as length, but in different levels, such as yard, foot and inch. Thus, it can be said that the unit yard is higher in level than the unit foot, and the unit foot is higher in level than the unit inch.

The result of the calculation is shown on the display D.

When the result of the calculation represents a length in terms of dimension, that is, when the calculation is "a length ± a length", "a length x a number", a length ÷ a number", an area ÷ length", or "a volume ÷ an area", the electronic calculator according to the present invention will automatically display the result of the calculation under a fraction expression when the inches can be represented by $^{x}/2^{n}$ (x is an integer, n is an integer), and in other cases, the calculator will automatically display the result under a decimal expression.

Referring to Fig. 2, there is shown a fragmentary view of the display D.

In the display D, there are provided segment electrodes to show the following symbols on the display.

| Symbol | Signification |
|---|---|
| Y | indicating the unit "yard" |
| ' | indicating the unit "foot" |
| " | indicating the unit "inch" |
| / | indicating the line between the numerator and denominator |
| SQ | used when an area is computed or inputted |
| CUB | used when a volume is computed or inputted |

An example of the display under the expression mode is shown below.

2.' 7" + 9. 1/8" = 3.' 4. 1/8"

The result of the calculation 3.' 4. 1/8", reads

3 feet 4 ⅛ inches.

An example of the display under the decimal expression mode is shown below.

3.' 2. 1/2" - 1.' 2. 3" = 2.' 0. 2"

Referring to Fig. 3, a block diagram of an electronic calculator of the present invention is shown.

In Fig. 3, a CPU (central processing unit) 1 controls a keyboard unit 3 and a display unit 4 in accordance with a program stored in a ROM (read only memory) 2, and also the CPU 1 executes calculations of inputted data from said keyboard unit 3.

The inputted data, such as data used during operation, data obtained as a result of operation, etc. are stored in a RAM (random access memory) 5.

The CPU 1 outputs various data to said display unit 4 for displaying various information, such as inputted number and the result of the calculation, etc., which are stored in RAM 5.

Keyboard unit 3 comprises ten keys 3a for inputting numbers, function keys 3b for inputting information for various arithmetic operations, and unit keys 3c for inputting units such as foot and inch.

When any of these keys 3a, 3b, 3c is depressed, a signal corresponding to the depressed key is transmitted to CPU 1.

The data stored in ROM 2 is used to control keyboard unit 3 and display unit 4 and also to perform various operations. CPU 1 performs various controls and operations as it reads out the records.

RAM 5 stores various kinds of information, and is defined by a first operand register X for storing a number of a first operand, a first operand dimension register Xd for carrying a dimension of the first operand, a second operand register Y for carrying a number of a second operand, a second operand dimension register Yd for carrying a dimension of the second operand, unit position registers YP and FP, an inch flag inF, and other registers and flags required for the internal process.

In order to prevent any error depression of the unit keys and/or the dimension keys at the wrong time sequence from being entered, flow charts are provided as will be described below with reference to Figs. 4-10.

(1) Unit Keys

The units must be entered in the order of a higher unit to a lower unit, that is, yard, foot and inch. Accordingly, the unit "foot", for example, should not be entered before entering the unit "yard", or in another example, after entering the unit "inch", no other units should be entered. Accordingly, the following rules are made.

(a) It is so programmed to inhibit the entering of the unit which is higher than the unit already entered. In other words, the entering of a higher unit is not accepted.

(b) However, it is permitted to reenter the unit which is different from the unit already entered just before, in the case when the user wishes to change the unit just entered.

(2) Dimension Keys

The area or the volume will not be expressed using two or more different units. In other words, the expression 21.5 yards$^2$ is permissible, but the expression 21 yards$^2$, 4.5 feet$^2$ is not permissible. Furthermore, when the arithmetic calculation is to be carried out, the first and second operands should have the same units. For example, 200 yards$^2$ ÷ 2 yards$^2$, or 200 yards$^2$ ÷ 2 yards, are permissible. This is because the units for areas or volumes have a different interchanging relationship from those for lengths, such as 1 yard = 3 feet → 1 yard$^2$ = 9 feet$^2$. Accordingly, only one unit is permitted to be used in entering an area or a cubic volume. Therefore, the following rule is made.

(c) To enter an area or a volume, the data therefor must be inputted in the order of numerical key, "SQ" or "CUB" key, and unit key.

In other words, after a unit key has been depressed and entered, the depression of the "SQ" or "CUB" key will not be entered.

(3) Fraction Keys

Since it is meaningless to represent a value in a fraction before entering the lowest unit, the fraction expression is permitted only when the lowest unit is to be entered. Accordingly, the following rule is made.

(d) Once the keys have been depressed to enter a fraction and a unit, the numerals can not be entered anymore.

The flowcharts of Figs. 4 to 10 are based on rules (a) through (d) specified above.

The meanings of the variables used in the flowcharts are defined as follows.

- X: display register for storing a numerical data which is to be shown on the screen of display unit 4.
- SLP: display pointer for indicating a slash "/" in a fraction to be shown on the display. No indication will be given when it is carrying "0". (The pointer positions are indicated in Fig. 2.)
- YP: display pointer for indicating the position of a unit symbol of "yard" to be shown on the display. No indication will be given when it is carrying "0".
- FP: display pointer for indicating the position of a unit symbol of "foot" to be shown on the display. No indication will be given when it is carrying "0".
- Xd: data representing the dimension of the numeral stored in display register X. Xd = 0 means "no unit", Xd = 1 means "length", Xd = 2 means "area", and Xd = 3 means "volume".
- inF: display flag for indicating, when it is carrying "1", a unit symbol of "inch". No indication will be given when it is carrying "0".

It is to be noted that, a number just entered by the depression of one of the following ten keys is displayed at the most right-hand end segment of the display D (Fig. 2), and the number(s) which are already entered shift one place toward the right-hand direction, as in a usual calculator.

Each of the flowcharts shown in Figs. 4-10 will be explained in detail hereinbelow.

Flowchart of Fig. 4

When the "YD" key is depressed, it is determined whether or not display register X is carrying "0" (step A1), whether or not display pointer SLP is carrying "1" (step A2), whether or not display pointer YP is carrying "0" (step A3), and whether or not display pointer FP is less than 2 (step A4).

When X is carrying "0" at step A1 or when display pointer SLP is carrying "1" at step A2, the program proceeds to the next routine to detect and process the next key input.

Furthermore, when display pointer YP is determined as not carrying "0" at step A3, meaning that the yard input unit has already been inputted, the program also proceeds to the next routine to detect and process the next key input.

When the display pointer FP, indicating the position of the symbol of the unit "foot" on the display, is carrying 2 or a higher number at step A4, it means that at least one number is entered by the depression of one of the ten keys, after the depression of the "FT" key. In such a case, the program proceeds to the next routine to detect and process the next key input without going through step A5, which is provided for entering the unit yard. In this manner, rule (a) is programmed. In other words, when a unit foot is already provided and, thereafter, at least one numeral is entered, it is no longer permitted to enter the unit yard by the depression of the "YD" key.

On the contrary, when the display pointer FP is carrying 1 or 0, the program goes to step A5 to make display pointer YP to carry "1". Thus, the unit yard is entered.

Then, at step A6, it is detected whether or not dimension Xd is 0. If Xd is 0, dimension Xd is made 1 (step A7), so that the entered number will be provided with a symbol showing the dimension of the length.

At step A8, it is detected whether or not display pointer FP is carrying "1", and if display pointer FP is carrying "1", "0" is entered in display pointer FP (step A9). Next, at step A10, it is detected whether or not display flag inF is set. If display flag inF is set, the flag inF is reset, so that the inch unit will not be displayed. Then, the program is ready to detect the next key input.

As apparent from the above description, step A4 is provided for inhibiting the entering of the yard unit data when the yard unit data is inputted immediately after entering a numerical data followed by the foot unit data.

Flowchart of Fig. 5

When the "FT" key is depressed, it is detected whether or not register X is carrying "0" (step B1), whether or not display pointer SLP is carrying "1" (step B2), and whether or not display pointer FP is carrying "0" (step B3).

When the register X is carrying "0" at step B1, or when display pointer SLP is carrying "1" at step A2, the program proceeds to the next routine to detect and process the next key input.

If display pointer FP is detected as not carrying "0" at step B3, it is so determined that the foot unit has already been inputted. Therefore, the program proceeds to the next routine to detect and process the next key input.

Next, at step B4, display pointer FP is loaded with "1". Then, at step B5, it is detected whether or not dimension Xd is "0". If dimension Xd is 0, dimension Xd is made 1 (step B6).

At step B7, it is detected whether or not display pointer YP is carrying "1". If display pointer YP is carrying "1", "0" is entered in display pointer YP. Next, at step B9, it is detected whether or not display flag inF is set. If flag inF is set, the flag inF is reset so that the inch unit will not be displayed. Then, the program is ready to detect the next key input.

Flowchart of Fig. 6

When the "IN" key is depressed, it is detected whether or not register X is carrying "0" (step C1) and whether or not display pointer SLP is carrying "1" (step C2).

When the register X is carrying "0" at step C1 or when display pointer SLP is carrying "1" at step C2, the program is ready to detect the next key input.

Next, at step C3, display flag inF is set. Then, at step C4, it is detected whether or not dimension Xd is 0. If dimension Xd is 0, 1 is entered in dimension Xd (step C5.)

At step C6, it is detected whether or not display pointer YP is carrying "1". If display pointer YP is carrying "1", 0 is entered in pointer YP (step C7). Next, at step C8, it is detected whether or not display pointer FP is carrying "1". If display pointer FP is carrying "1", 0 is entered in pointer FP. Then, the program is ready to detect the next key input.

In the program steps of Fig. 4 for entering the "YD" key, the detection of the display flag inF is not provided at the beginning. This is to permit the user to depress a unit key which is different from the one depressed immediately before, as described hereinbefore. In other words, it is so programmed that it is not permitted to enter any numerical keys after the unit "inch" has been entered, as will be explained later. It is sufficient, therefore, for the display unit 4 to show the inch indication only at the lowest pointer position.

Flowchart of Fig. 7

When the "SA" key is depressed, it is detected whether or not display flag inF is 0 (step D1), whether or not display pointer YP is carrying "0" (step D2), whether or not display pointer FP is carrying "0" (step D3), whether or not display pointer SLP is carrying "1" (step D4), and whether or not display register X is carrying "0" (step D5).

If flag inF is 1 at step D1, or display pointer YP is not 0 at step D2, or display pointer FP is not 0 at step D3, the program is ready to detect the next key input. In this manner, rule (c) is programmed.

Also, when display pointer SLP is 1 or when display register X is 0, the program is ready to detect the next key input.

When the program has moved to step D6, the dimension Xd is made 2 so that the entered number will be provided with a symbol showing the dimension of the area.

Flowchart of Fig. 8

When the "CUB" key is depressed, it is detected whether or not display flag inF is 0 (step E1), whether or not display pointer YP is 0 (step E2), whether or not display pointer FP is 0 (step E3), whether or not display pointer SLP is 1 (step E4), and whether or not display register X is 0 (step E5).

If flag inF is 1 at step E1, or display pointer YP is not 0 at step E2, or display pointer FP is not 0 at step E3, the program is ready to detect the next key input. In this manner, rule (c) is programmed.

Also, when display pointer SLP is 0 or when display register X is 0, the program is ready to detect the next key input.

When the program has moved to step F6, the dimension Xd is made 3 so that the entered number will be provided with a symbol showing the dimension of the cubic volume.

Flowchart of Fig. 9

When the "a/b" key is depressed, it is detected whether or not display register X is 0 (step F1), whether or not display pointer SLP is 0 (step F2), whether or not display pointer YP is 1 (step F3), whether or not display pointer FP is 1 (step F4), whether or not display flag inF is 1 (step F5), and whether or not dimension Xd is less than 2 (step F6).

If register X is 0 at step F1, or pointer SLP is not 0 at step F2, or pointer YP is 1 at step F3, or pointer FP is 1 at step F4, or flag inF is 1 at step F5, the program is ready to detect the next key input.

When the program has moved to step F7, 1 is entered in display pointer SLP.

Flowchart of Fig. 10

When the ten numerical keys are depressed, it is detected whether or not display flag inF is 1 (step G1), whether or not dimension Xd is less than 2 (step G2), whether or not display pointer SLP is less than 3 (step G3), and whether or not display pointer SLP is 0, or if display pointer YP is not 1 and, at the same time, if display pointer FP is not 1 (step G4).

If said display flag inF is 1 at step G1, the program is ready to detect the next key input. This is to prevent the entering of any numerical key after the inch unit is entered.

If dimension Xd is equal to or greater than 2 at step G2, or if said display pointer SLP is equal to or greater than 3 at step G3, the program is ready to detect the next key input.

At step G4, if pointer SLP is 0, or if pointer YP is not 1 and, at the same time, pointer FP is not 1, the program is ready to detect the next key input. In this manner, rule (d) is programmed.

Next, at step G5, the contents of display register X are shifted to the left to be displayed in the next segment located on the left side.

At the next step G6, the numeral inputted by depressing one of the ten keys is entered at the lowest place in the display register X as a least significant number.

At step G7, it is detected whether or not display pointer YP is 0. If pointer YP is 0, 1 is loaded in the pointer YP (step G8).

At step G9, it is detected whether or not display pointer FP is 0. If pointer FP is 0, 1 is loaded in the pointer FP (step G10).

At step G11, it is detected whether or not display pointer SLP is 0. If pointer SLP is 0, 1 is loaded in the pointer SLP.

The program described above can be summarized in two points as follows.

The first point is the input order of the different units. When the data is inputted in the order of:

first number data, first unit data, second number data, second unit data, third number data and third unit data,

it is necessary that the first unit has the highest level, the second unit has the next highest level and the third unit has the lowest level, and that the first and second numbers should not be a fraction or a decimal. In the above example, it is possible to delete the inputting of the first number data, first unit data, second number data, and second unit data.

It is to be noted that the first number data is inputted by the depression of at least one of the ten numerical keys. The second and third number data are inputted in the same manner. Also, the first, second and third units are inputted, according to the above embodiment, by the depression of the yard key, foot key, and inch key, respectively.

According to the present invention, the units are not restricted to those hereinbefore described, but other units can be used, such as units of meter, centimeter and millimeter for expressing length, or units of kilogram, gram and milligram for expressing weight.

The second point is the input order of the dimension key and the unit key. After the number data is inputted, the dimension key and the unit key must be entered in said order. It should be noted here that the dimension key and the unit key can not be entered in the opposite order. Also, when inputting a value with a unit, specifically an area or a cubic volume, only one unit can be inputted.

Furthermore, when a fraction is entered and, thereafter, a unit is entered, it is impossible to further input any number or any unit.

When numerical values and units are inputted alternately in series to the electronic calculator of the present invention, the second or the third entered unit is lower than the first or the second entered unit, respectively, or otherwise, it is prevented to enter the unit. For example, when values are inputted in yards, feet, and inches, if the value in feet is first inputted, the value in yards can not be inputted thereafter, according to the present invention. Units can not be inputted unless a higher unit precedes a lower unit, so that no error will occur in the order in which units are inputted.

Referring to Fig. 11, a flowchart showing the details of a procedure is illustrated.

Examples are now given with respect to operations for arithmetic calculations, and also an operation for taking a square root.

The first operand is stored in register X and the second operand is stored in register Y. Furthermore, the dimension number of the first operand is stored in register Xd and that of the second operand is stored in register Yd. The dimension number is 0 when the operand refers to a dimensionless number; the dimension number is 1 when the operand refers to a length; the dimension number is 2 when the operand refers to an area; and the dimension number is 3 when the operand refers to a volume.

First, before the operation is carried out, the type of the arithmetic operator is detected (step #1).

The program moves to step #2 when the arithmetic operator is for addition, to step #3 when the arithmetic operator is for subtraction, to step #4 when the arithmetic operator is for multiplication, to step #5 when the arithmetic operator is for division, and to step #6 when the arithmetic operator is for taking a square root.

As described above, the procedures differ according to the type of arithmetic operator, and it is detected, as will be described below, whether or not the dimension of the first operand and that of the second operand are acceptable.

When the detected arithmetic operator is for addition, it is detected whether or not the dimension of the first operand stored in register Xd is identical with the dimension of the second operand stored in register Yd (step #2).

Similarly, when the detected arithmetic operator is for subtraction, it is detected whether or not the dimension is identical between the first and second operands, as carried out in the same manner as described above (step #3).

When the detected arithmetic operator is for multiplication, it is detected whether or not the sum of the dimension number of the first operand stored in said register Xd and that of the second operand stored in said register Yd, represented as (Xd + Yd) is equal to or less than 3. When the sum is equal to 3, the result will represent a cubic volume; when the sum is equal to 2, the result will represent an area; when the sum is equal to 1, the result will represent a length; and when the sum is equal to 0, the result will represent a dimensionless number. When the sum exceeds 3, the result will be meaningless, and the error is shown on the display.

When the detected arithmetic operator is for division, it is detected whether or not the difference between the dimension number of the first operand stored in register Xd and that of the second operand stored in register Yd, represented as (Xd - Yd), is equal to or greater than 0.

When the detected arithmetic operator is for taking the square root, it is detected whether or not the dimension of the first operand stored in said register Xd is equal to an even number.

When the dimension numbers of both the first and second operands have been determined to be acceptable at step #2, #3, #4, #5, or #6, the program moves to the next step #7, #8, #9, #10, or #11, respectively.

If the dimension number is found to be unacceptable with respect to the first and second operands at any one of steps #2, #3, #4, #5, or #6, the program moves to an error routine, which is shown in Fig. 12.

At step #7, the second operand stored in register Y is added to the first operand stored in register X, and the sum thereof is stored in register X.

At step #8, the second operand stored in register Y is subtracted from the first operand stored in register X, and the difference therebetween is stored in register X.

At step #9, the first operand stored in register X is multiplied by the second operand stored in register Y, and the result of the multiplication, i.e., the product is stored in register X. Next, at step #12, the dimension number of the first operand stored in register Xd is added to that of the second operand stored in register Yd, and the sum thereof is stored in register Xd.

At step #10, the second operand stored in register Y is divided by the first operand stored in register X, and the result of the division, i.e., the quotient is stored in register X. Next, at step #13, the dimension number of the first operand stored in register Xd is subtracted from that of the second operand stored in register Yd, and the difference thereof is stored in register Xd.

At step #11, the square root of the first operand stored in said register X is taken, and the obtained square root is stored in register X. Next, at step #14, the dimension number of the first operand stored in register Xd is divided by 2, and the quotient thereof is stored in register Xd.

As apparent from the above, the operations of multiplication (step #12), division (step #13), and square root (step #14) require calculations (steps #12, #13 and #14) to obtain the dimension number to be used for the result of the arithmetic operation.

The results of the arithmetic operation are displayed in different styles, depending on the dimension number. When the dimension number of the calculated result of the operation stored in register Xd is 0, the display shows only the result of the operation stored in register X (step #21).

When the dimension number of the calculated result of the operation stored in register Xd is not 0, the operation moves to step #16, step #17, or step #18 according to the dimension number.

At step #19, it is detected whether or not a fractional representation is possible on the display, that is, whether or not the part following the decimal point of the result of the operation can be represented as a fraction in the form of $^{x}/2^{n}$. When a fractional representation is possible, the fraction expression is selected so that the result of the operation stored in register X is converted to a fractional representation (step #20). On the contrary, when the fractional representation is not possible, the decimal expression is selected so that the result of the operation stored in register X is shown on the display (step #21) without conversion to the fractional representation.

When the dimension number of the result of the operation is 2, "SQ" will be shown through step #17 for the indication of the square.

When the dimension number of the result of the operation is 3, "CUB" will be shown through step #18 for the indication of the cube.

At step #21, the result of the operation is displayed and, thereafter, the program proceeds to the steps for the next operation.

On the display, the dimensionless numbers and the numbers representing the length can be distinguished such that the latter is shown with a unit, and the former is shown with no unit.

Referring to Fig. 13, there is illustrated the procedure of step #19 in detail. First, the decimal part of the number as stored in register X is read out (step m1). In the drawing at step m1, frac (X) represents the decimal part (the part following the decimal point) of the number stored in register X. The decimal part of the number is stored in register X1. Next, at step m2, the decimal part stored in register X1 is multiplied by $2^K$ and the product is stored in register X2. Here, K represents a predetermined natural number arbitrarily chosen in such a manner as to make the largest possible denominator $2^K$. In the example herein described, 6 was chosen for K so that the largest possible denominator would be 64 ($K=6$, $2^6=64$). Next, at step m3, it is examined whether or not the number stored in register X2 contains a decimal part, that is, whether frac (X2) is 0 or not. When frac $(X2)=0$, a fractional representation is possible (step m4), and when frac $(X2) \neq 0$, a fractional representation is not possible (step m5).

Referring to Fig. 14, there is shown a procedure of step #20 in detail. First, the value of the above-mentioned K is stored in register W (step n1). Next, it is detected whether or not the number stored in register X2 is an even number (step n2). When the number stored in register X2 is an even number, the process moves to step n3, where the number is divided by 2 (the numerator is divided by 2) and the quotient is stored in register X2. Then, the program moves to step n4, where 1 is subtracted from the number stored in register W (step n4). Since the denominator is $2^W$, the subtraction, W-1 as described above, is substantially equal to dividing the fraction by 2. Then, the program returns to step n2. Again it is detected whether or not the number stored in register X2 is an even number. When the number is detected as not to be an even number, the number in register X2 is no longer reducible by 2. Then, the program moves to step n5 at which the value of the denominator $2^W$ is stored in register X3 (step n5). Then, a fraction is displayed such that the value stored in register X3 is displayed as the denominator; the value stored in register X2 is displayed as the numerator; and the number stored in register X is displayed as the integer (step n6).

An example for displaying the fraction will be given next.

It will be examined whether or not 1.3125 ($1\frac{5}{16}$ ) can be represented as a fraction by the flowchart of Figs. 6 and 7. At step m1, 0.3125 will be stored in register X1. At step m2, when $K=6$, $0.3125 \times 2^6 = 20$ is calculated and the result is stored in register X2.

Since the number stored in register X2 has no decimal part, the number stored in register X can be expressed in the fraction (steps m3 and m5).

Next, since $W=K$ (step n1) and X2 is an even number (step n2)

$$X2 = X2 \div 2 = 10$$

and

$$W = W - 1 = 5$$

are carried out at steps n3 and n4.

Therefore, when steps n2, n3 and n4 are repeated, it follows: $X2 = 5$, and $W = 4$, to reach a condition that the number in register X2 is no longer an even number. Thus, the program moves to step n5 in which register X3 is stored with 16, as indicated below.

$$X3 = 2^W = 2^4 = 16$$

Therefore, $X2=5$ is obtained as a numerator, and $X3=16$ is obtained as a denominator, which are used for the fraction display on the screen.

Another example is a case when the given number is $13.8\dot{3}$ ($13\frac{5}{6}$). In this case, $X1 = 0.8\dot{3}$ and $X2 = 53.\dot{3}$, so that it is so detected that the fractional expression using $2^K$ as a denominator is impossible.

## Claims

**1.** An electronic calculator comprising:
means (3a, step G6) for inputting a numerical data,
means (3c, steps A5,B4) for inputting at least first and second unit data which are in the same category but in different levels such that the first unit is higher in level than the second unit,
means (steps D6,E6) for inputting a second order dimension data and a third order dimension data,
**characterized through**
means (step A4) for inhibiting the entering of the first unit data when the first unit data is inputted immediately after entering a numerical data followed by the second unit data, and
means (steps D2,D3,E2,E3) for inhibiting the entering of the second or the third order dimension data immediately after entering a unit data.

**2.** An electronic calculator as claimed in claim 1, wherein said unit data inputting means (3c) is arranged to input first, second and third unit data which are in the same category but in different levels such that the first unit is higher in level than the second unit, and the second unit is higher in level than the third unit.

**3.** An electronic calculator as claimed in claim 2, wherein said first, second and third unit data represent yard, foot and inch, respectively.

**4.** An electronic calculator as claimed in one of claims 1-3, wherein said second order dimension data is a square data and said third order dimension data is a cubic data.

**5.** An electronic calculator as claimed in one of claims 1-4, further comprising:
means (step F7) for inputting a numerical data expressed by the use of a fraction, and
means (step G3) for inhibiting the entering of a numerical data when the numerical data is inputted immediately after entering a unit data followed by a numerical data expressed in a fraction.

## Patentansprüche

**1.** Elektronischer Rechner, mit:
einer Einrichtung(3a, Schritt G6) zum Eingeben eines numerischen Datenwertes,
einer Einrichtung (3c, Schritte A5,B4) zum Eingeben von wenigstens eines ersten und eines zweiten Einheiten-Datenwerts, die sich in der gleichen Kategorie befinden, doch von unterschiedlicher Größe sind, derart, daß die erste Einheit von höherer Größe ist als die zweite Einheit,
einer Einrichtung (Schritte D6,E6) zum Eingeben eines Dimensionsdatenwerts einer zweiten Ordnung und eines Dimensionsdatenwerts einer dritten Ordnung,
**gekennzeichnet durch**
eine Einrichtung (Schritt A4) zur Verhinderung des Eintragens des ersten Einheiten-Datenwerts, wenn der erste Einheiten-Datenwert unmittelbar nach der Eintragung eines von dem zweiten Einheiten-Datenwert gefolgten numerischen Datenwerts eingegeben wird, und
einer Einrichtung (Schritte D2,D3,E2,E3) zur Verhinderung des Eintragens der Dimensionsdaten der zweiten oder der dritten Ordnung unmittelbar nach der Eintragung eines Einheiten-Datenwerts

**2.** Elektronischer Rechner nach Anspruch 1, bei dem die Einheiten-Datenwert-Eingabeeinrichtung (3c) erste, zweite und dritte Einheiten-Datenwerte eingibt, die sich in der gleichen Kategorie befinden, doch von unterschiedlicher Größe sind, derart, daß die erste Einheit von höherer Größe ist als die zweite Einheit und die zweite Einheit von höherer Größe ist als die dritte Einheit.

**3.** Elektronischer Rechner nach Anspruch 2, bei dem die ersten, zweiten und dritten Einheiten-Datenwerte Yard, Foot bzw. Inch repräsentieren.

**4.** Elektronischer Rechner nach einem der Ansprüche 1-3, bei dem der Dimensionsdatenwert der zweiten Ordnung ein Flächen-Datenwert und der Dimensionsdatenwert der dritten Ordnung ein Raum-Datenwert ist.

**5.** Elektronischer Rechner nach einem der Ansprüche 1-4, ferner mit:
einer Einrichtung (Schritt F7) zum Eingeben eines unter Verwendung eines Bruchs ausgedrückten numerischen Datenwerts, und
einer Einrichtung (Schritt G3) zur Verhinderung des Eintragens eines numerischen Datenwerts, wenn der numerische Datenwert unmittelbar nach der Eintragung eines von einem durch einen Bruch ausgedrückten numerischen Datenwert gefolgten Einheiten-Datenwerts eingegeben wird.

## Revendications

**1.** Calculatrice électronique, comprenant :
un moyen (3a, étape G6) pour entrer une donnée numérique,
un moyen (3c, étapes A5, B4) pour entrer au moins des première et deuxième données unité qui sont de la même catégorie mais de niveaux différents, de telle manière que la première unité soit de niveau supérieur à la deuxième unité,
un moyen (étapes D6, E6) pour entrer une donnée de dimension du second ordre, et une donnée de dimension du troisième ordre,
caractérisée par
un moyen (étape A4) pour empêcher l'introduction de la première donnée unité lorsque la première donnée unité est entrée immédiatement après l'introduction d'une donnée numérique suivie par la deuxième donnée unité, et
un moyen (étapes D2, D3, E2, E3) pour empêcher l'introduction de la donnée de dimension du second ou du troisième ordre immédiatement après l'introduction d'une donnée unité.

**2.** Calculatrice électronique selon la revendication 1, dans laquelle ledit moyen d'entrée de données unité (3c) est destiné à entrer des première, deuxième et troisième données unité qui sont de la même catégorie mais de niveaux différents, de telle manière que la première unité soit de niveau supérieur à la deuxième unité, et que la deuxième unité soit de niveau supérieur à la troisième unité.

**3.** Calculatrice électronique selon la revendication 2, dans laquelle lesdites première, deuxième et troisième données unité représentent, respectivement, le yard, le pied et le pouce.

**4.** Calculatrice électronique selon l'une quelconque des revendications 1 à 3, dans laquelle ladite donnée de dimension du second ordre est une donnée de carré et ladite donnée de dimension du troisième ordre est une donnée de cube.

**5.** Calculatrice électronique selon l'une quelconque des revendications 1 à 4, comprenant en outre:
un moyen (étape F7) pour entrer une donnée numérique exprimée par l'utilisation d'une fraction, et
un moyen (étape G3) pour empêcher l'introduction d'une donnée numérique lorsque la donnée numérique est entrée immédiatement après l'introduction d'une donnée unité suivie par une donnée numérique exprimée en une fraction.

Fig. 1

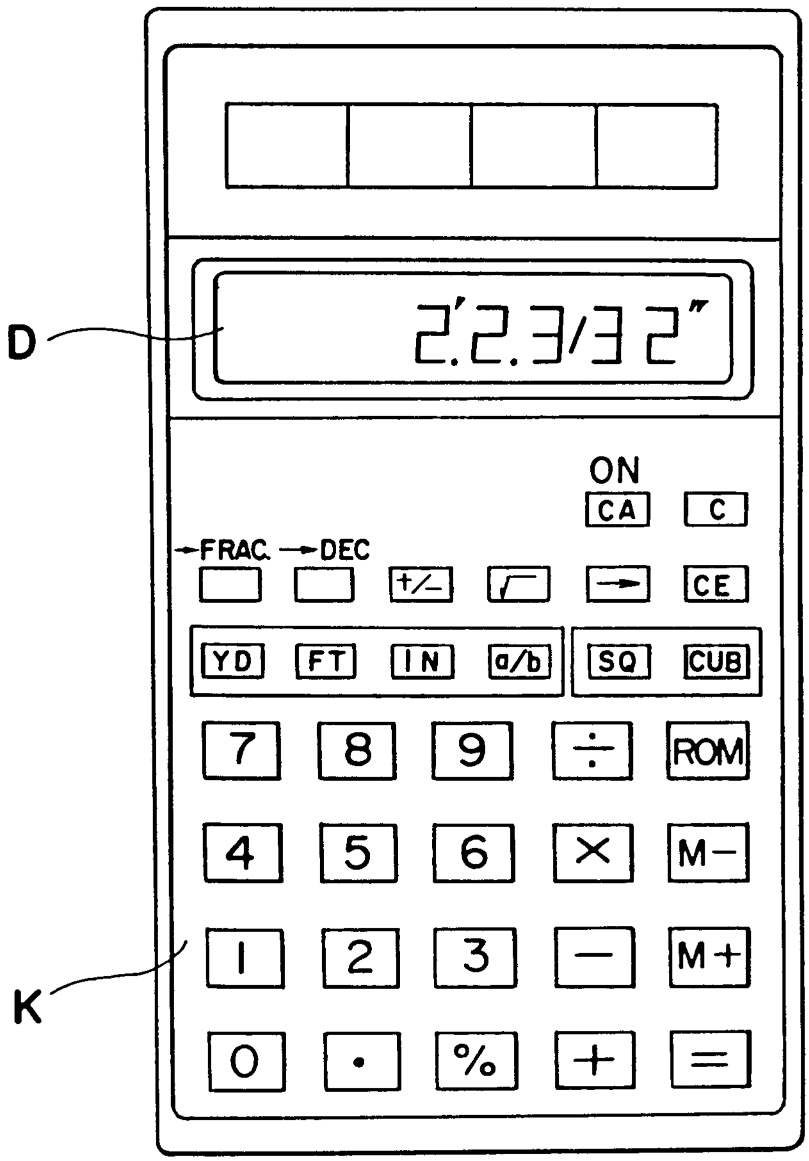

Fig. 2

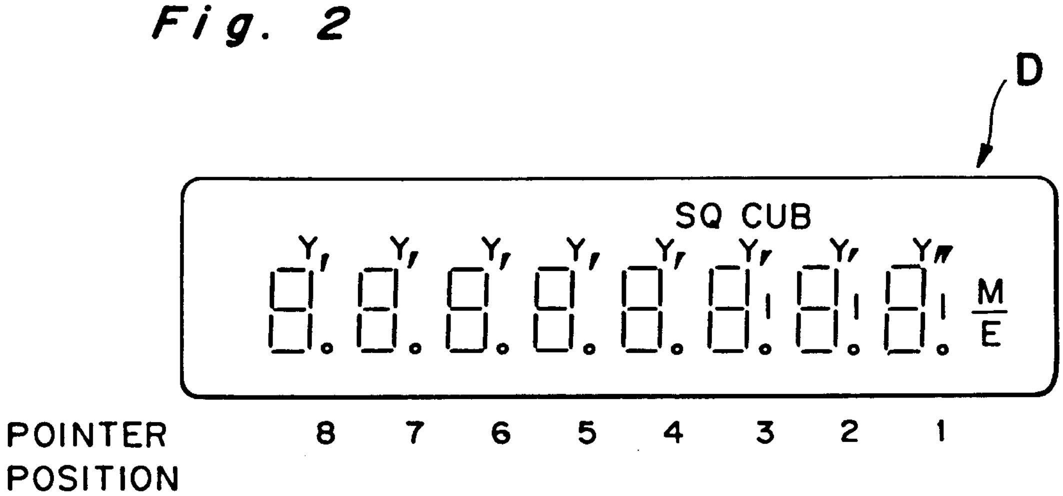
D
SQ CUB
M
E
POINTER
POSITION
8
7
6
5
4
3
2
1

Fig. 3

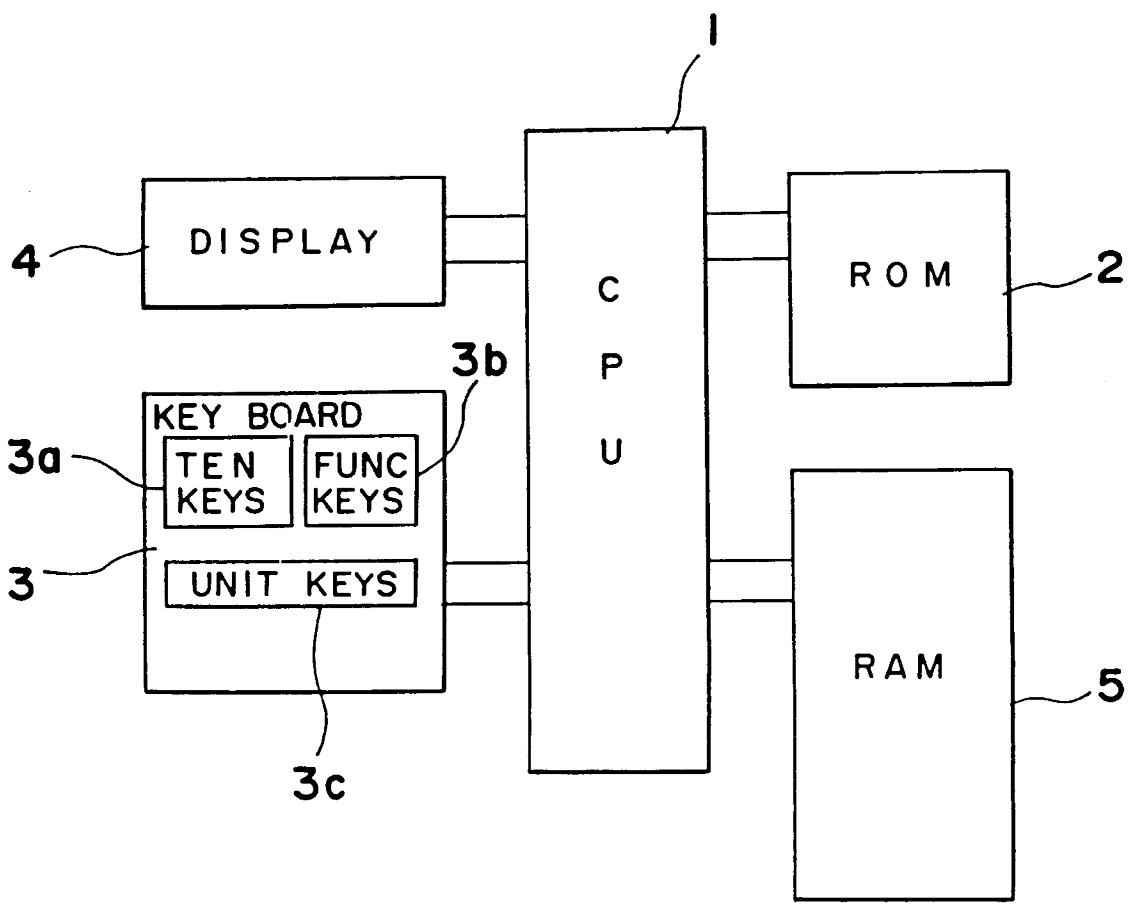
1
DISPLAY
4
CPU
ROM
2
3b
KEY BOARD
3a
TEN KEYS
FUNC KEYS
3
UNIT KEYS
3c
RAM
5

*Fig. 4*

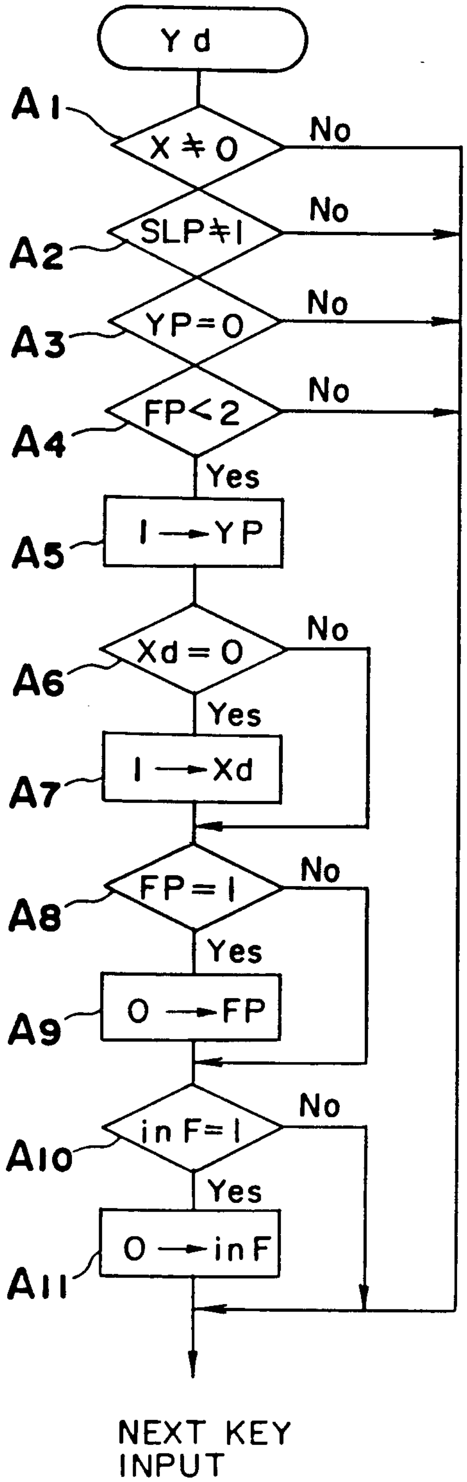
Yd
A1
X≠0
No
A2
SLP≠1
No
A3
YP=0
No
A4
FP<2
No
Yes
A5
1→YP
A6
Xd=0
No
Yes
A7
1→Xd
A8
FP=1
No
Yes
A9
0→FP
A10
inF=1
No
Yes
A11
0→inF
NEXT KEY INPUT

*Fig. 5*

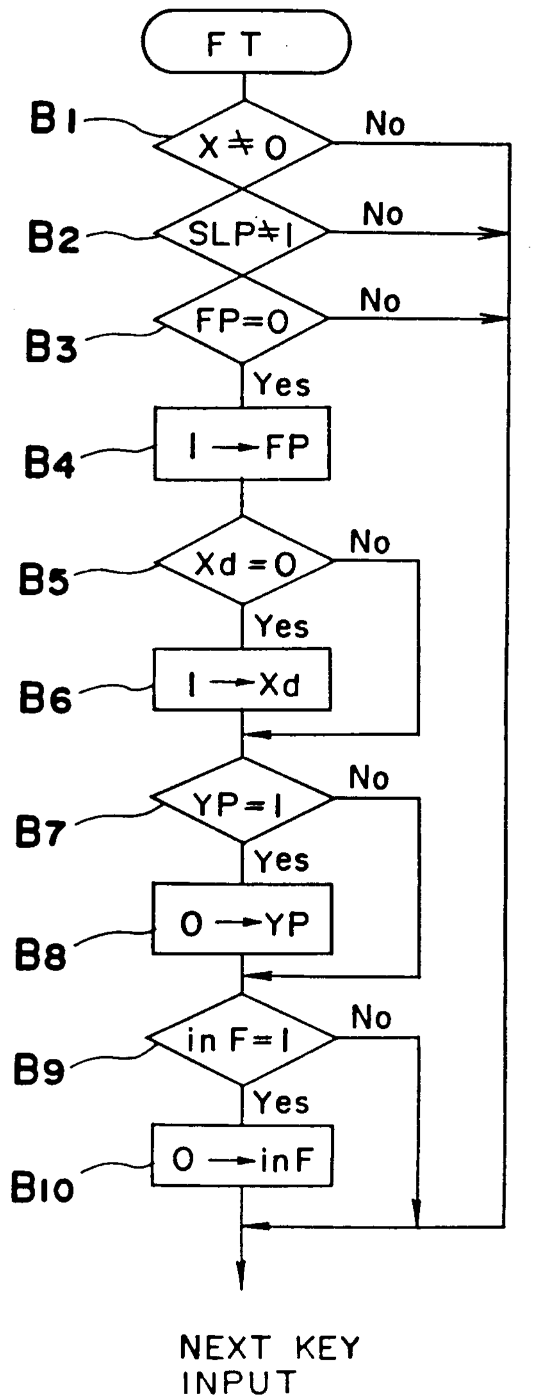
FT
B1
X≠0
No
B2
SLP≠1
No
B3
FP=0
No
Yes
B4
1→FP
B5
Xd=0
No
Yes
B6
1→Xd
B7
YP=1
No
Yes
B8
0→YP
B9
inF=1
No
Yes
B10
0→inF
NEXT KEY INPUT

*Fig. 7*

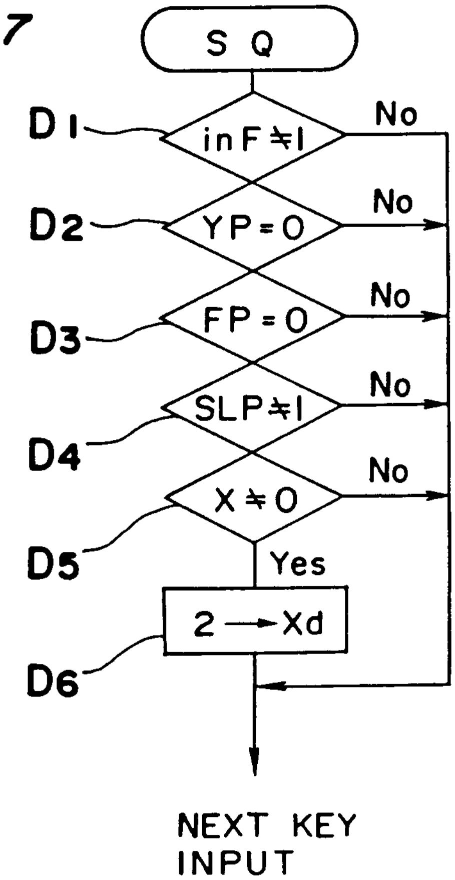


*Fig. 6*

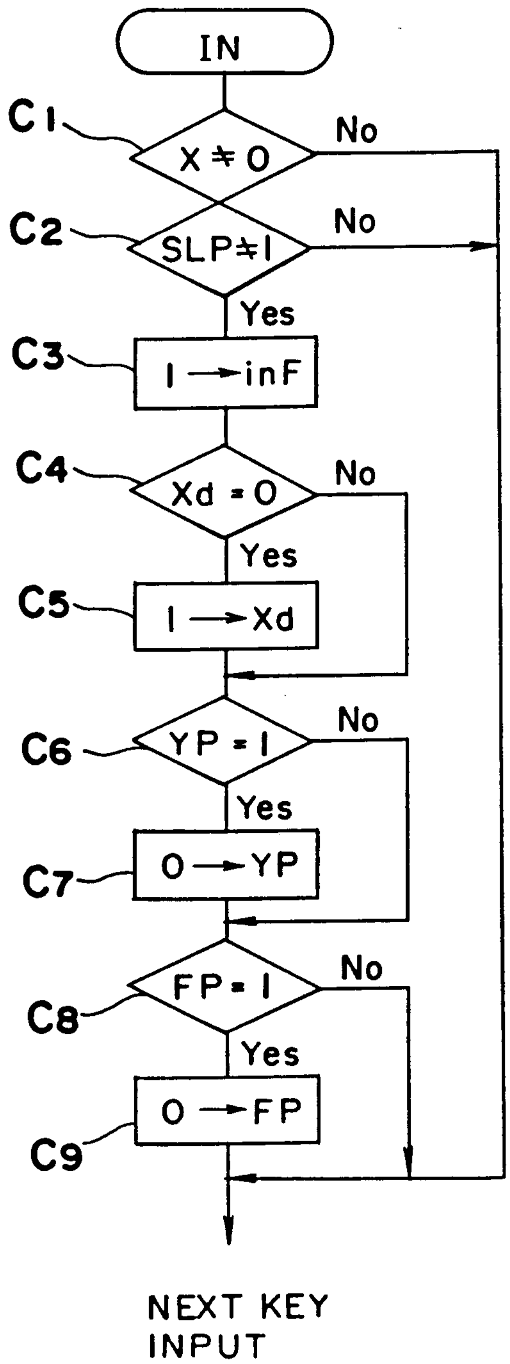


*Fig. 8*

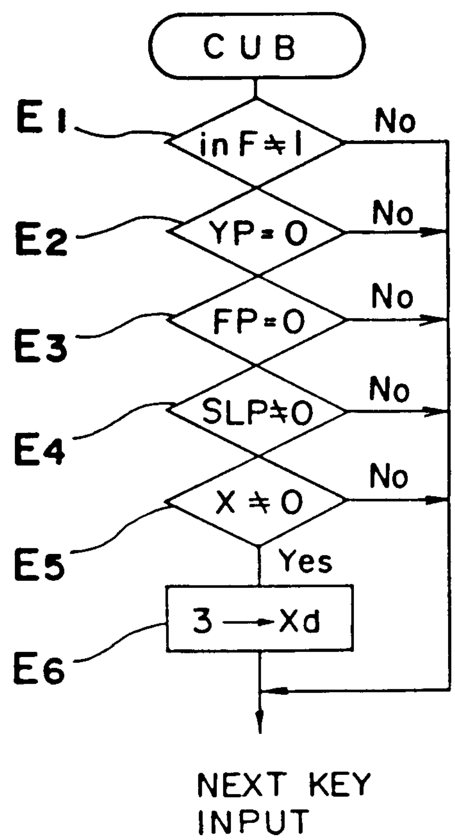

*Fig. 10*

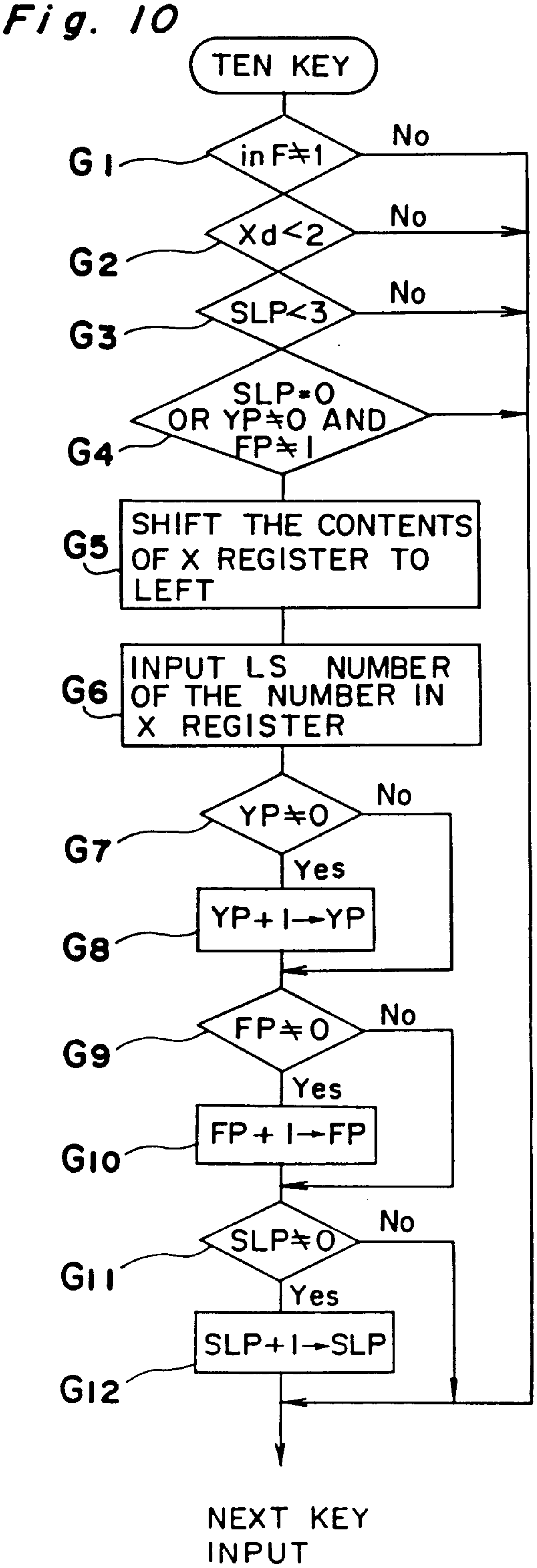

TEN KEY
G1
in F≠1
No
G2
Xd<2
No
G3
SLP<3
No
G4
SLP=0 OR YP≠0 AND FP≠1
G5
SHIFT THE CONTENTS OF X REGISTER TO LEFT
G6
INPUT LS NUMBER OF THE NUMBER IN X REGISTER
G7
YP≠0
No
Yes
G8
YP+1→YP
G9
FP≠0
No
Yes
G10
FP+1→FP
G11
SLP≠0
No
Yes
G12
SLP+1→SLP
NEXT KEY INPUT


*Fig. 9*

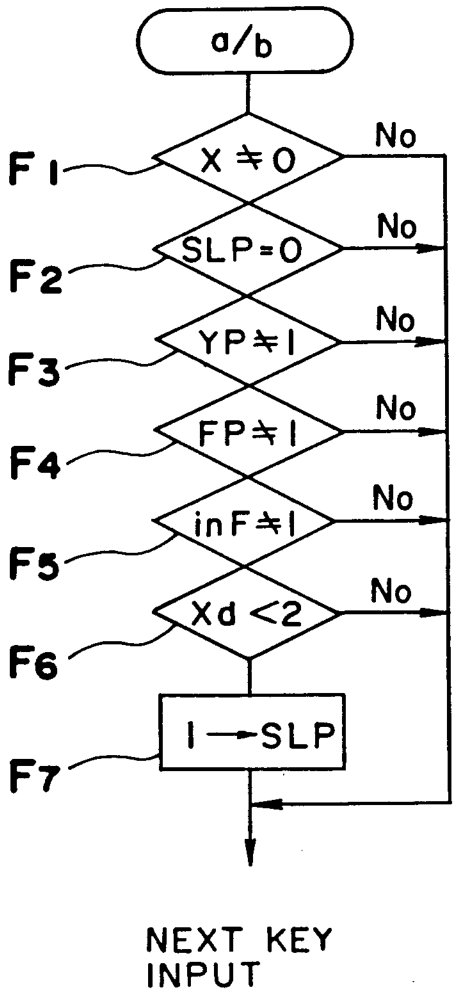

a/b
F1
X≠0
No
F2
SLP=0
No
F3
YP≠1
No
F4
FP≠1
No
F5
in F≠1
No
F6
Xd <2
No
F7
1→SLP
NEXT KEY INPUT

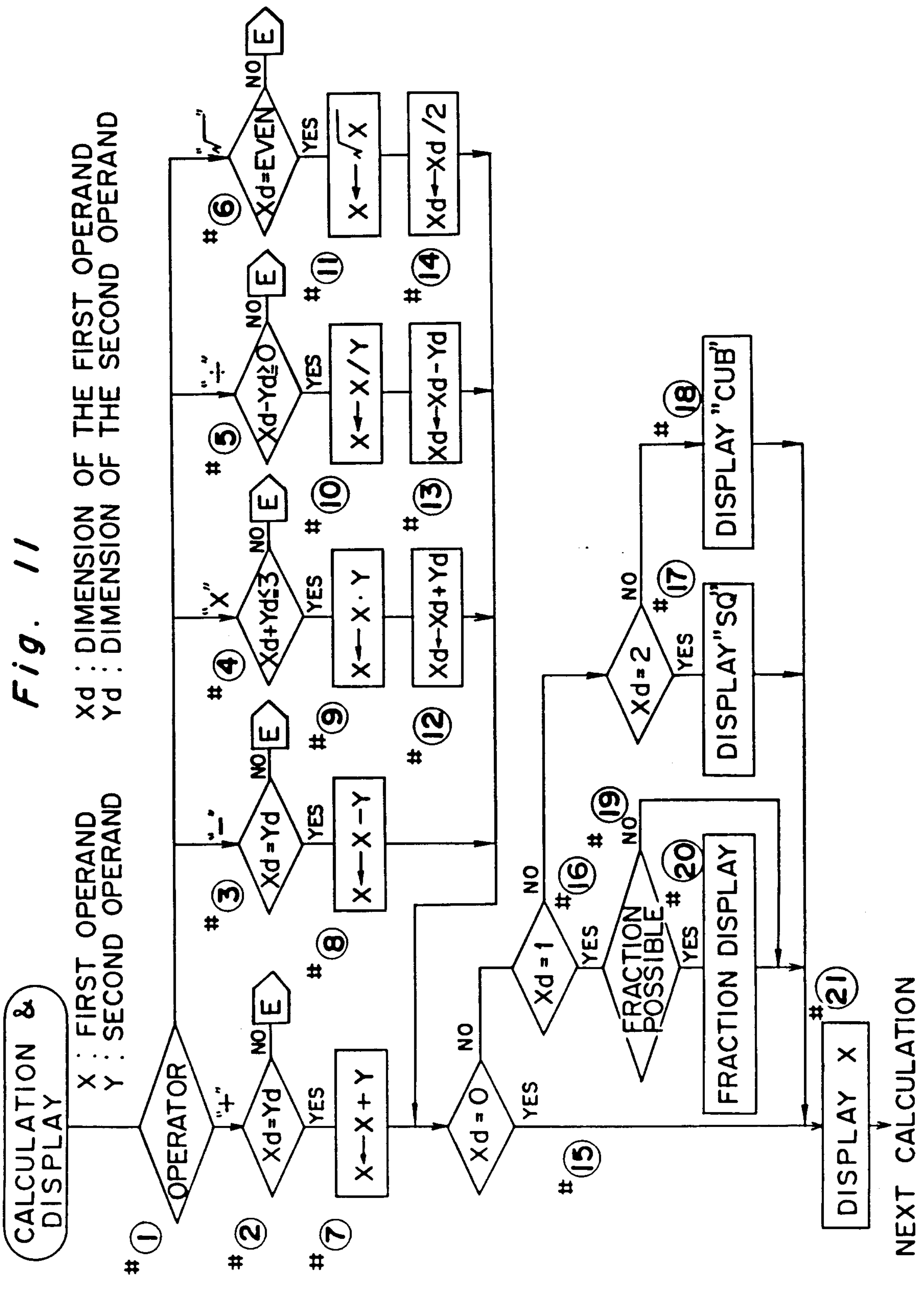
CALCULATION & DISPLAY
X : FIRST OPERAND
Y : SECOND OPERAND
Xd : DIMENSION OF THE FIRST OPERAND
Yd : DIMENSION OF THE SECOND OPERAND
#1
OPERATOR
"+"
"−"
"X"
"÷"
"√"
#2
Xd=Yd
#3
Xd=Yd
#4
Xd+Yd≦3
#5
Xd-Yd≧0
#6
Xd=EVEN
YES
NO
E
#7
X←X+Y
#8
X←X−Y
#9
#10
#11
X←X·Y
X←X/Y
X←√X
#12
#13
#14
Xd←Xd+Yd
Xd←Xd−Yd
Xd←Xd/2
#15
Xd=0
#16
Xd=1
#17
Xd=2
#18
#19
FRACTION POSSIBLE
#20
FRACTION DISPLAY
DISPLAY "SQ"
DISPLAY "CUB"
#21
DISPLAY X
NEXT CALCULATION
Fig. 11

Fig. 12

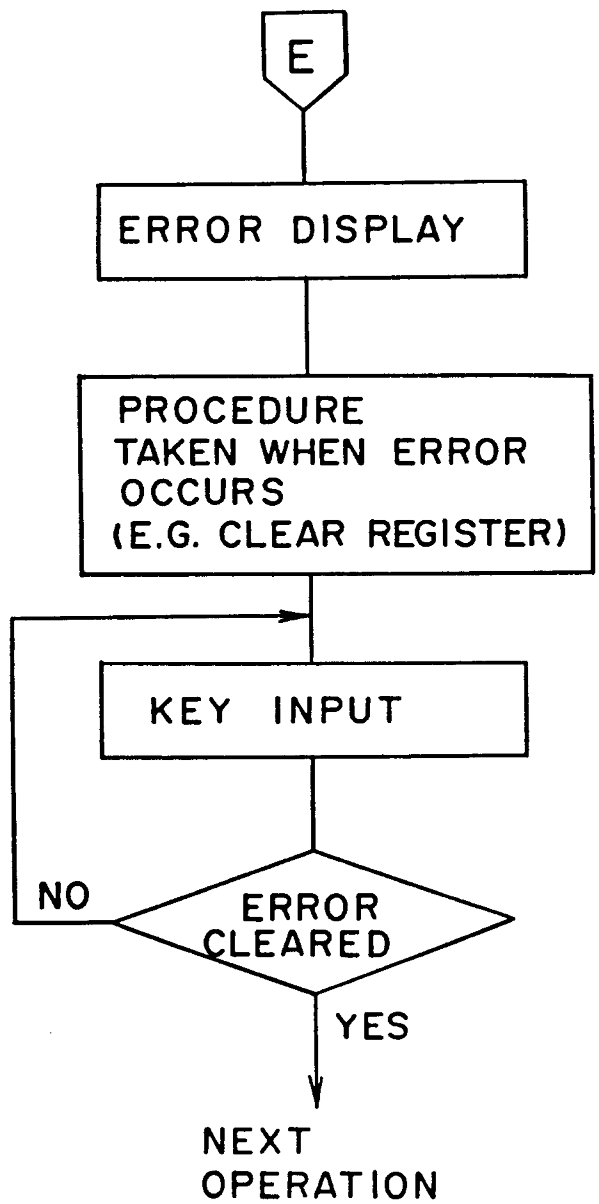
E
ERROR DISPLAY
PROCEDURE TAKEN WHEN ERROR OCCURS (E.G. CLEAR REGISTER)
KEY INPUT
ERROR CLEARED
NO
YES
NEXT OPERATION

Fig. 13

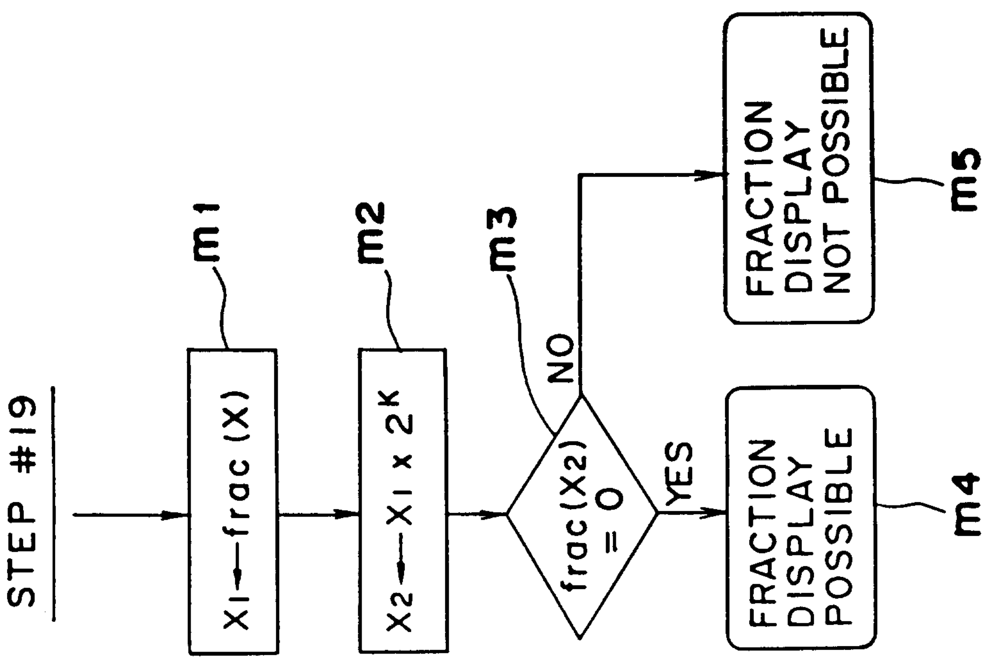
STEP #19
X1 ← frac (X)
m1
X2 ← X1 x 2^K
m2
frac(X2) = 0
m3
YES
NO
FRACTION DISPLAY POSSIBLE
m4
FRACTION DISPLAY NOT POSSIBLE
m5

Fig. 14

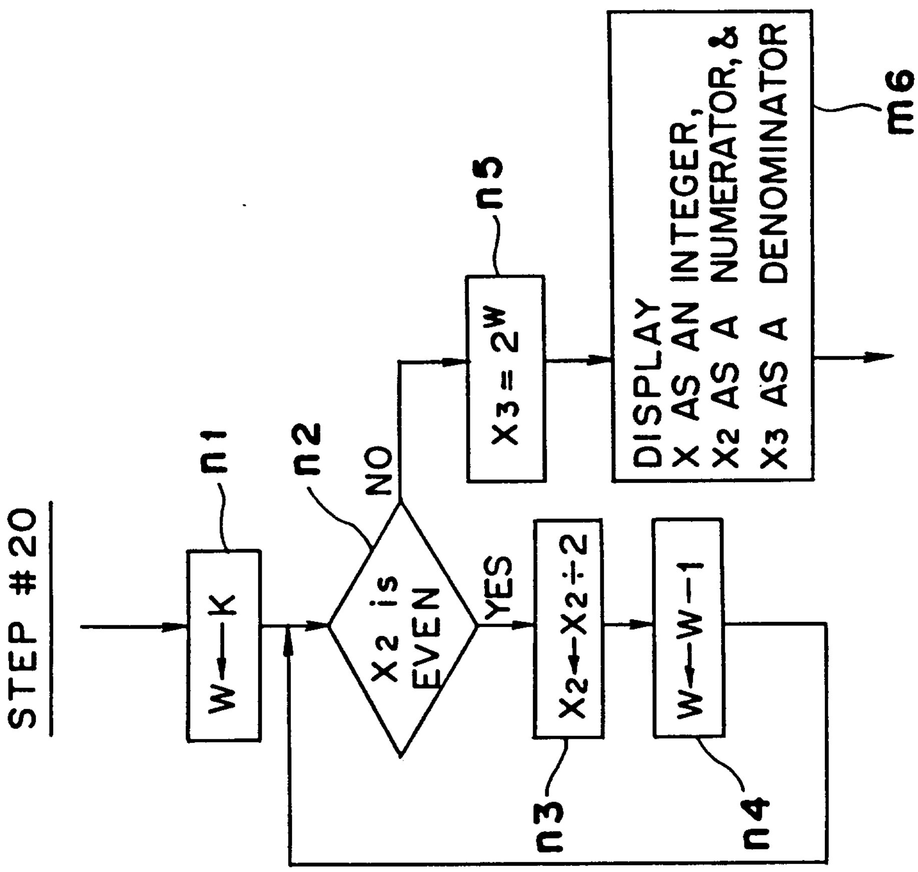
STEP #20
W ← K
n1
X2 is EVEN
n2
YES
NO
X2 ← X2 ÷ 2
n3
W ← W − 1
n4
X3 = 2^W
n5
DISPLAY
X AS AN INTEGER,
X2 AS A NUMERATOR, &
X3 AS A DENOMINATOR
m6